# EUROPEAN PATENT APPLICATION

(11) **EP 4 296 462 A1**
(43) Date of publication of application: **27.12.2023**
(21) Application number: 21941704.5
(22) Date of filing: 07.12.2021
(51) Int. Cl.: E05F 15/689, B60J 1/00

(54) **VEHICLE WINDOW CONTROL METHOD AND APPARATUS**

(30) Priority: 14.05.2021 CN 202110528718
(71) Applicant: Shanghai Kostal-Huayang Automotive Electric Co., Ltd., Shanghai 201814 (CN); Kostal (Shanghai) Mechatronic Co., Ltd, Shanghai 201814 (CN)
(72) Inventor: ZHOU, Hu, Shanghai 201814 (CN); SHEN, Guanhui, Shanghai 201814 (CN)
(74) Representative: Grünecker Patent- und Rechtsanwälte PartG mbB
(86) International application number: PCT/CN2021/136047
(87) International publication number: WO 2022/237142

(57) **Abstract**

A vehicle window control method and apparatus. According to the solution, a user is prompted about a desired window selected by a user after receiving a valid instruction for selecting a desired vehicle window sent by the user by means of a vehicle window selection touch panel, and controls the selected desired vehicle window to rise or fall after receiving a valid instruction for controlling the desired vehicle window to rise or fall sent by the user by means of the vehicle window control touch panel. The user does not need to control the vehicle window by means of mechanical press keys, and a feedback apparatus can also be controlled to prompt the user that the desired vehicle window is currently being controlled. Hence, in the present application, the user may not only be prevented from controlling the vehicle window by means of mechanical press keys, but the user may also be prompted when a user desires to control the vehicle window, thereby facilitating blind operations of the user, ensuring the safe driving of the user, and improving the intelligence of vehicle window control.

## Description

This application claims priority to Chinese Patent Application No. 202110528718.8 titled "METHOD AND DEVICE FOR CONTROLLING WINDOW OF VEHICLE", filed on May 14, 2021 with the China National Intellectual Property Administration (CNIPA), which is incorporated herein by reference in its entirety.

### FIELD

The present disclosure relates to the field of vehicle control, and in particular to a method and a device for controlling a window of a vehicle.

### BACKGROUND

According to a conventional technology, a window is raised or lowered generally by means of a manually-operated handle for rotating a gear, or by utilizing cooperation of multiple mechanical keys and multiple relays, where a user operates a mechanical key to turn on or turn off a relay corresponding to the mechanical key, so that a motor of the window is controlled to rotate forward or backward, resulting in rise or fall of the window. However, with the development of vehicle intelligence, the control of the window through the manually-operated handle or the mechanical key is inconsistent with a concept of an integral intelligence of the vehicle. Therefore, how to achieve an intelligent control of the window is a problem required to be solved urgently.

### SUMMARY

An objective of the present disclosure is to provide a method and a device for controlling a window of a vehicle, which can allow the user to control a window without a mechanical key, and provide feedback to the user when the user controls a designated window, so as to facilitate a user operation without looking, ensure driving safety, and achieve an intelligent control of the window.

To solve the above problems, a method for controlling a window of a vehicle is provided according to the present disclosure. The method includes: determining whether a valid command for selecting a designated window is received, where the valid command for selecting a designate window is received is generated by a user through a touch panel for window selection; controlling a feedback apparatus to indicate the designated window selected by the user, and determining whether a valid command for raising or lowering the designated window is received, in a case that the valid command for selecting a designated window is received, where the valid command for raising or lowering the designate window is generated by the user through a touch panel for window control; and raising or lowering the designated window and controlling the feedback apparatus to indicate that the designated window is being controlled by the user, in a case that the valid command for raising or lowering the designated window is received.

In an embodiment, the touch panel for window selection includes a window pre-selection key and multiple window selection keys, where the window selection keys are in one-to-one correspondence to windows of the vehicle. The determining whether a valid command for selecting a designated window is received includes: determining whether a valid command for starting window selection is received, where the valid command for starting window selection is generated by the user through the window pre-selection key; determining, in a case that the valid command for starting window selection is received, whether a valid command generated by the user touching the window selection keys is received; and in a case that a valid command generated by the user performing an operation on the window selection keys is received, determining that the valid command for selecting a designated window is received, and determining a window corresponding to a window selection key as the designated window, where the window selection key is last selected among the multiple window selection keys before a finger of the user leaves the touch panel for window selection.

In an embodiment, the touch panel for window selection further includes a key for selecting all windows. After the determining whether a valid command for starting window selection is received, the method further includes: determining, in a case that the valid command for starting window selection is received, whether a valid command for selecting all windows as the designated window is received, where the valid command for selecting all windows as the designated window is generated by the user through the key for selecting all windows; raising or lowering the designated window and controlling the feedback apparatus to indicate that the designated window is being controlled by the user, in a case that the valid command for selecting all windows as the designated window is received; and determining, in a case that no valid command for selecting all windows as the designated window is received, whether a valid command generated by the user performing an operation on the multiple window selection keys is received.

In an embodiment, the feedback apparatus includes at least one of: window selection indicators in one-to-one correspondence to the window selection keys, a window-rise indicator indicating raising a window, a window-fall indicator indicating lowering a window, a display device, an auditory prompt device, or a vibration prompt device. After the determining whether a valid command for starting window selection is received, the method further includes: in a case that the valid command for starting window selection is received, performing at least one of: turning on at least one of the window selection indicators, the window-rise indicator, or the window-fall indicator; controlling the display device to indicate that a control on a window by the user is started; controlling the auditory prompt device to play a preset audio; or controlling the vibration prompt device to vibrate, and determining whether a valid command generated by the user performing an operation on the multiple window selection keys is received. The controlling, in a case that the valid command for selecting a designated window is received, a feedback apparatus to indicate the designated window selected by the user includes: in a case that the valid command for selecting a designated window is received, performing at least one of: turning on a window selection indicator corresponding to the designated window and turning off the window selection indicator corresponding to a window other than the designated window; turning on the window-rise indicator; turning on the window-fall indicator; controlling the display device to indicate the designated window selected by the user; controlling the auditory prompt device to play a preset audio; or controlling the vibration prompt device to vibrate, and determining whether a valid command for raising or lowering the designated window is received. The raising or lowering the designated window and controlling the feedback apparatus to indicate that the designated window is being controlled by the user, in a case that the valid command for raising or lowering the designated window is received, includes: in a case that the valid command for raising or lowering the designated window is received, raising or lowering the designated window, and performing at least one of: turning on a window selection indicator corresponding to the designated window and turning off the window selection indicator corresponding to a window other than the designated window; turning on the window-rise indicator in a case that the valid command instructs to raise the window; turning on the window-fall indicator in a case that the valid command instructs to lower the window; controlling the display device to indicate information of the designated window selected by the user; controlling the auditory prompt device to play a preset audio; or controlling the vibration prompt device to vibrate.

In an embodiment, the raising or lowering the designated window and controlling the feedback apparatus to indicate that the designated window is being controlled by the user, in a case that the valid command for raising or lowering the designated window is received, includes: raising the designated window in a case that a valid command generated by the user performing an operation on the touch panel for window control with a first preset number of fingers is received, and lowering the designated window in a case that a valid command generated by the user performing an operation on the touch panel for window control with a second preset number of fingers is received, and controlling the feedback apparatus to indicate that the designated window is being controlled by the user, where the first preset number is not equal to the second preset number.

In an embodiment, the touch panel for window control includes a first control touch panel and a second control touch panel. The designated window and controlling the feedback apparatus to indicate that the designated window is being controlled by the user, in a case that the valid command for raising or lowering the designated window is received, includes: raising the designated window in a case that a valid command for controlling the designated window generated by the user through the first control touch panel is received; lowering the designated window in a case that a valid command for controlling the designated window generated by the user through the second control touch panel is received; and controlling the feedback apparatus to indicate that the designated window is being controlled by the user .

In an embodiment, the raising or lowering the designated window and controlling the feedback apparatus to indicate that the designated window is being controlled by the user, in a case that the valid command for raising or lowering the designated window is received, includes: raising the designated window in a case that a valid command for controlling the designated window generated by the user performing an operation at a first preset position on the touch panel for window control is received, and stopping raising the designated window when the user stops the operation at the first preset position; and lowering the designated window if a valid command for controlling the designated window generated by the user performing an operation at a second preset position on the touch panel for window control is received, and stopping lowering the designate window until the user stops the operation at the second preset position.

To solve the above problems, a device for controlling a window of a vehicle is provided according to the present disclosure. The device includes a memory and a processor. The memory is configured to store a computer program. The processor is configured to perform, when executing the computer program, the method for controlling a window of a vehicle described above.

In an embodiment, the device further includes a user operation touch panel. The user operation touch panel includes a touch panel for window selection and a touch panel for window control. The touch panel for window selection includes a window pre-selection key and multiple window selection keys. The window selection keys are in one-to-one correspondence to windows of the vehicle.

In an embodiment, the user operation touch panel is rectangular; the touch panel for window selection is circular and recessed; the window pre-selection key is arranged at a center of the touch panel for window selection, and is circular and designated; each of the window selection keys is fan-shaped, and the window selection keys constitute a ring surrounding the window pre-selection key; and the touch panel for window control includes a first control touch panel and/or a second control touch panel, and each of the first control touch panel and the second control touch panel is square and recessed.

A method and a device for controlling a window of a vehicle are provided according to the present disclosure. With the solutions, when a valid command for selecting a designated window generated by a user through a touch panel for window selection is received, the user is informed of the designated window selected by the user, and when a valid command for raising or lowering the designated window generated by the user through a touch panel for window control is received, the selected designated window is raised or lowered, so that the user can control the window without a mechanical key, and a feedback apparatus can further be controlled to indicate that the designated window is being controlled by the user. In the present disclosure, the user is allowed to control a window without a mechanical key, and is informed when controlling a designated window, which facilitates a user operation without looking, ensures driving safety, and achieves an intelligent control of the window.

### BRIEF DESCRIPTION OF THE DRAWINGS

In order to more clearly illustrate technical solutions in embodiments of the present disclosure, the drawings to be used in the conventional technology and the embodiments are briefly described below. Apparently, the drawings in the following description show only some embodiments of the present disclosure, and other drawings may be obtained by those skilled in the art from the drawings without any creative effort.
Figure 1 is a flow chart of a method for controlling a window of a vehicle according to an embodiment of the present disclosure;
Figure 2 is a schematic structural diagram of a device for controlling a window of a vehicle according to an embodiment of the present disclosure;
Figure 3 is a schematic structural diagram of a device for controlling a window of a vehicle according to an embodiment of the present disclosure;
Figure 4 is a schematic diagram of a user operation touch panel according to an embodiment of the present disclosure; and
Figure 5 is a schematic diagram of a user operation touch panel according to another embodiment of the present disclosure.

### DETAILED DESCRIPTION OF EMBODIMENTS

A core of the present disclosure is to provide a method and a device for controlling a window of a vehicle, which enables the user to control a window without a mechanical key, and provide feedback to the user when the user controls a designated window, so as to facilitate a user operation without looking, ensure driving safety, and achieve an intelligent control of the window.

In order to make objectives, technical solutions and advantages of the present disclosure clearer, the technical solutions in the embodiments of the present disclosure are further described clearly and completely with reference to the drawings in the embodiments of the present disclosure hereinafter. It is apparent that the described embodiments are only some, rather than all, embodiments of the present disclosure. All other embodiments obtained based on the embodiments of the present disclosure by those skilled in the art without any creative effort shall fall within the protection scope of the present disclosure.

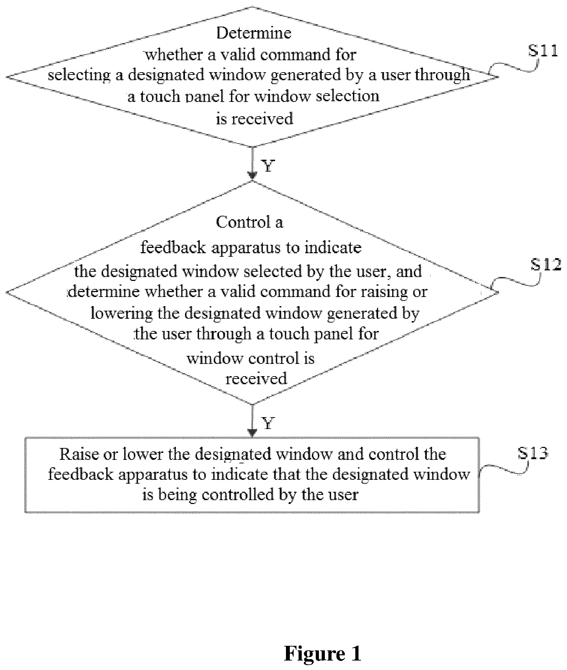

Reference is made to Figure 1, which is a flow chart of a method for controlling a window of a vehicle according to an embodiment of the present disclosure. The method includes the following steps S11 to S13.

In step S11, it is determined whether a valid command for selecting a designated window is received, where the valid command for selecting a designate window is generated by a user through a touch panel for window selection.

In the embodiment, the manually-operated handle and the mechanical key in the conventional technology is replaced by the touch panel for window selection and a touch panel for window control. A user may select and control a designated window by touching the touch panel for window selection and the touch panel for window control, realizing an intelligent control of the window.

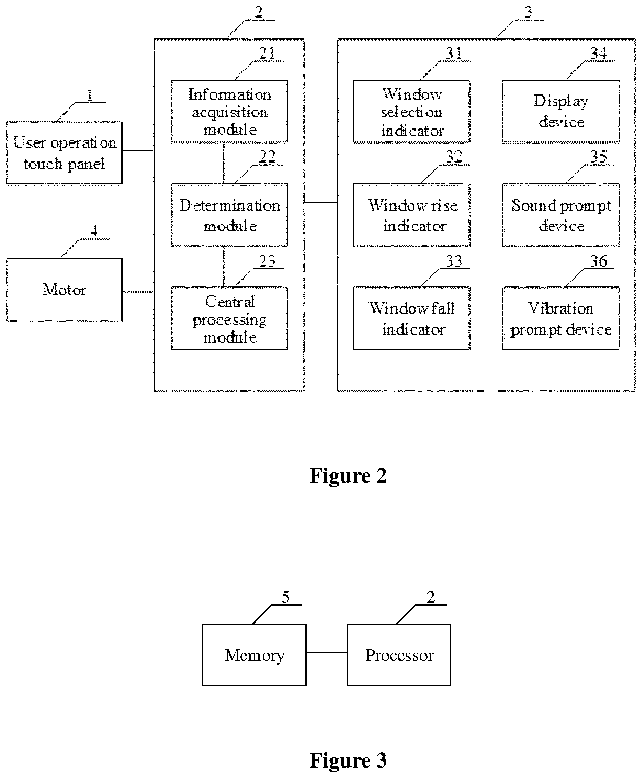

A processor 2 first determines whether a valid command for selecting a designated window is received from the user, that is, whether the user touches the touch panel for window selection, to select a window that the user expects to control. A processor 2 is provided with an information acquisition module 21, a determination module 22 and a central processing module 23. The information acquisition module 21 is configured to acquire a touch signal generated when the user touches the touch panel for window selection. The determination module 22 is configured to determine whether the touch signal acquired by the information acquisition module 21 is generated due to an unintended touch on the touch panel for window selection by the user, or due to an intended touch. Thereby, it is avoided that the window is controlled by the unintended touch of the user. In a case that the determination module 22 determines that the command for selecting a designated window generated by the user is valid, the central processing unit 2 may determine the designated window selected by the user based on touch on the touch panel for window selection by the user. That is, the central processing unit 2 determines that a valid command for selecting a designated window is received. Reference is made to Figure 2, which is a schematic structural diagram of a device for controlling a window of a vehicle according to an embodiment of the present disclosure.

In step S12, a feedback apparatus 3 is controlled to indicate the designated window selected by the user, and it is determined whether a valid command for raising or lowering the designated window is received, in a case that it is determined that the valid command for selecting a designated window is received. The valid command for raising or lowering the designated window is generated by the user through the touch panel for window control.

After it is determined that the valid command for selecting the designated window is received, the feedback apparatus 3 is controlled to indicate the designated window currently selected by the user, so that the user at a driver seat can be informed of whether the selected designated window is expected without moving sight from a front route to the touch panel for window selection, so that driving safety is ensured.

In addition, it needs to further determine whether the user performs a control on the designated window. The information acquisition module 21 is configured to acquire a touch signal generated by the user touching the touch panel for window control. The determination module 22 is configured to determine whether the touch signal acquired by the information acquisition module 21 is generated due to an unintended touch on the touch panel for window control by the user, or due to an intended touch, so as to avoid undesired control on the window due to the unintended touch of the user. In a case that the determination module 22 determines that the command for raising or lowering the designated window generated by the user is valid, the central processing unit 2 may determine, based on the touch on the touch panel for window selection by the user, that the user expects to raise or lower the designated window. That is, the central processing unit 2 determines that the valid command for raising or lowering the designated window is received.

In step S13, the designated window is raised or lowered and the feedback apparatus 3 is controlled to indicate that the designated window is being controlled by the user, in a case that the valid command for raising or lowering the designated window is received.

The designated window is raised in a case that the valid command instructs to raise the window. The designated window is lowered in a case that the valid command instructs to lower the designated window.

In addition, the feedback apparatus 3 is further controlled to indicate that the designated window is being controlled by the user, and therefore the user at the driver seat can be informed of whether the designated window is controlled as expected without moving sight from a front route to the touch panel for window control, so that driving safety is ensured.

It should be noted that in the present disclosure, the designated window is raised or lowered by controlling a motor 4 connected with the designated window to rotate forward or backward so as to drive to raise or lower the designated window.

In summary, with the present disclosure, the user is allowed to control the window without a mechanical key, and is informed when controlling the designated window, which facilitates a user operation without looking, ensures driving safety, and achieves an intelligent control of the window.

Based on the above embodiment, some preferred embodiments are provided.

In a preferred embodiment, the touch panel for window selection includes a window pre-selection key and multiple window selection keys. The window selection keys are in one-to-one correspondence to windows of the vehicle. A process of determining whether a valid command for selecting a designated window is received includes: determining whether a valid command for starting window selection, which is generated by the user through the window pre-selection key, is received; determining, in a case that the valid command for starting window selection is received, whether a valid command generated by the user touching the window selection keys is received; and in a case that a valid command generated by the user performing an operation on the window selection keys is received, determining that the valid command for selecting a designated window is received, and determining a window corresponding to a window selection key as the designated window, where the window selection key is last selected among the window selection keys before a finger of the user leaves the touch panel for window selection.

In the present disclosure, the window pre-selection key is provided in the touch panel for window selection in order to further avoid unintended operation by the user on the window selection key. The user may first perform an operation on the window pre-selection key to wake up the window selection keys. Then the user may perform an operation on a window selection key corresponding to the designated window to select the designated window. In the present disclosure, the operation on the window pre-selection key may be, but is not limited to, touching or pressing; and the operation on the window selection key may be, but is not limited to, touching or pressing.

In addition, in order to allow a user operation without looking for the user to control the window, that is, in order to allow the user to operate, without looking at, the touch panel for window selection to select the designated window, the window pre-selection key may be designed cambered, and each of the window selection keys may be fan-shaped and the window selection keys constitute a ring surrounding the window pre-selection key. The user may determine a position of each of the window selection keys by touching the window pre-selection key, and thereby accurately select the designated window. For example, after the user performs an operation on the window pre-selection key, a designated window may be selected by the user sliding a finger from the window pre-selection key to a window selection key corresponding to the designated window.

It should be noted that considering that the user may simultaneously perform an operation on multiple window selection keys, the window corresponding to the window selection key that is selected immediately before the finger of the user leaves the touch panel for window selection is determined as the designated window to be controlled in a subsequent process. That is, the designated window may be determined as a window corresponding to the window selection key where the finger finally stops when sliding clockwise or anti-clockwise on the ring constituted by the multiple window selection keys.

As a preferred embodiment, the touch panel for window selection further includes a key for selecting all windows.

After determining whether a valid command for starting window selection is received, the method further includes: determining, in a case that the valid command for starting window selection is received, whether a valid command for selecting all windows as the designated window, which is generated by the user through the key for selecting all windows, is received; raising or lowering the designated window and controlling the feedback apparatus 3 to indicate that the designated window is being controlled by the user, in a case that the valid command for selecting all windows as the designated window is received; and determining, in a case that no valid command for selecting all windows as the designated window is received, whether a valid command generated by the user performing an operation on the window selection keys is received.

In the present disclosure, the key for selecting all windows is provided in the touch panel for window selection, so that all windows may be controlled simultaneously, when necessary, by performing an operation on the key for selecting all windows when selecting a designated window. The operation may be pressing or touching, which is not limited in the present disclosure.

In addition, the window pre-selection key may serve as the key for selecting all windows. For example, all windows are selected as the designated windows in a case that the user performs an operation on the window pre-selection key for at least three seconds, where a specific operation is not limited in the present disclosure.

As a preferred embodiment, the feedback apparatus 3 includes at least one of the following: window selection indicators 31 in one-to-one correspondence to the window selection keys, a window-rise indicator 32 indicating raising a window, a window-fall indicator 33 indicating lowering a window, a display device 34, an auditory prompt device 35, or a vibration prompt device 36.

After determining whether a valid command for starting window selection is received, the method further includes: in a case that the valid command for starting window selection is received, performing at least one of turning on the window selection indicators 31, the window-rise indicator 32, and the window-fall indicator 33, controlling the display device 34 to indicate that a control on a window by the user is started, controlling the auditory prompt device 35 to play a preset audio, or controlling the vibration prompt device 36 to vibrate; and determining whether a valid command generated by the user performing an operation on the window selection keys is received.

A process of controlling, in a case that the valid command for selecting a designated window is received, a feedback apparatus to indicate the designated window selected by the user includes: in a case that the valid command for selecting a designated window is received, performing at least one of turning on a window selection indicator corresponding to the designated window and turning off the window selection indicator corresponding to a window other than the designated window, turning on the window-rise indicator 32, turning on the window-fall indicator 33, controlling the display device 34 to indicate the designated window selected by the user, controlling the auditory prompt device 35 to play a preset audio, or controlling the vibration prompt device 36 to vibrate; and determining whether a valid command for raising or lowering the designated window is received.

A process of raising or lowering the designated window and controlling the feedback apparatus 3 to indicate that the designated window is being controlled by the user, in a case that the valid command for raising or lowering the designated window is received, includes: in a case that the valid command for raising or lowering the designated window is received, raising or lowering the designated window, and performing at least one of turning on a window selection indicator 31 corresponding to the designated window and turning off the window selection indicator 31 corresponding to a window other than the designated window, turning on the window-rise indicator 32 in a case that the valid command instructs to raise the window, turning on the window-fall indicator 33 in a case that the valid command instructs to lower the window, controlling the display device 34 to indicate information of the designated window selected by the user, controlling the auditory prompt device 35 to play a preset audio, or controlling the vibration prompt device 36 to vibrate.

In the present disclosure, the feedback apparatus 3 may include, but not limited to, one of the window selection indicators 31 in one-to-one correspondence to the window selection keys, the window-rise indicator 32 indicating raising a window, the window-fall indicator 33 indicating lowering a window, the display device 34, the auditory prompt device 35, and the vibration prompt device 36, or a combination thereof.

For example, each of the window selection indicators 31 may be arranged correspondingly below a window selection key. When the user performs an operation on the window pre-selection key, all of the window selection indicators 31 are turned on, the window-rise indicator 32 indicating raising a window and the window-fall indicator 33 indicating lowering a window are turned on, the display device 34 indicates that a control of the window by the user is started, the auditory prompt device 35 plays a preset audio and the vibration prompt device 36 vibrates, so that the user can determine that a current operation on the window pre-selection key is valid without looking at the window pre-selection key.

After the user performs an operation on the window selection key, only the window selection indicator corresponding to the designated window is turned on, the window-rise indicator 32 indicating raising a window and the window-fall indicator 33 indicating lowering a window are turned on, the display device 34 indicates the window selected by the user, the auditory prompt device 35 plays a preset audio and the vibration prompt device 36 vibrates, so that the user can determine that a current operation on the window selection key is valid without looking at the window selection key.

When the user controls to raise the designated window, the window selection indicator 31 corresponding to the designated window is turned on, the window-rise indicator 32 is turned on, the display device 34 indicates that the designated window is being controlled by the user, the auditory prompt device 35 plays a preset audio and the vibration prompt device 36 vibrates, so that the user can determine that a current control on the designated window is valid without looking at the touch panel for window control, and driving safety is improved.

In the present disclosure, the window selection indicators 31, the window-rise indicator 32 indicating raising a window, and the window-fall indicator 33 indicating lowering a window may be, but are not limited to, smart red-green-blue light emitting diodes (RGB LEDs) which imaging with three primary colors collectively. Each of the window selection indicator 31, the window-rise indicator 32, and the window-fall indicator 33 can emit light in different colors and change a color of the light based on a setting of the user. After a valid signal transmitted by the user through the window pre-selection key is received, the processor 2 may turn on the window selection indicators 31 successively to present an effect of chasing light, or may turn on the window selection indicators 31 simultaneously, which is not limited herein.

In addition, the display device 34 may be a screen in the vehicle, which is not limited in the present disclosure.

In the present disclosure, the audio played through the auditory prompt device 35 may vary according to a user setting, and a frequency, amplitude or acceleration of vibration of the vibration prompt device 36 may be changed based on a user setting.

In addition, the auditory prompt device 35 and the vibration prompt device 36 may continuously play the audio and vibrate while the user touching the touch panel for window selection and the touch panel for window control, and stops playing the audio and vibrating until the user leaves the window selection operation panel and the window control operation panel.

The display device 34 may display, while the user performing an operation on the touch panel for window selection and the touch panel for window control, a screen indicating that the designated window is operated by the user, in which a current state, such as a moving direction and a current position, of the window may be updated, and stops displaying the screen until the user leaves the window selection operation panel and the window control operation panel.

As a preferred embodiment, the process of raising or lowering the designated window and controlling the feedback apparatus to indicate that the designated window is being controlled by the user, in a case that the valid command for raising or lowering the designated window is received, includes: raising the designated window in a case that a valid command generated by the user performing an operation on the touch panel for window control with a first preset number of fingers is received, and lowering the designated window in a case that a valid command generated by the user performing an operation on the touch panel for window control with a second preset number of fingers is received; and controlling the feedback apparatus 3 to indicate that the designated window is being controlled by the user; where the first preset number is not equal to the second preset number.

In the embodiment, the designated window is raised in a case that the user operates on the touch panel for window control with the first preset number of fingers; and the designated window is lowered in a case that the user operates on the touch panel for window control with the second preset number of fingers. For example, the designated window is raised to a highest point in a case that the user operates with two fingers sliding downwards on the touch panel for window control; and the designated window is lowered to a lowest point in a case that the user operates with one finger sliding downwards on the touch panel for window control. The specific operation is not limited in the present disclosure, as long as the control of the designated window can be realized.

In addition, the touch panel for window control may be provided with two grooves, and the user may control the designated window by sliding with one or two fingers in the two grooves.

As a preferred embodiment, the touch panel for window control includes a first control touch panel and a second control touch panel.

A process of raising or lowering the designated window and controlling the feedback apparatus to indicate that the designated window is being controlled by the user, in a case that the valid command for raising or lowering the designated window is received, includes: raising the designated window in a case that a valid command for controlling the designated window generated by the user through the first control touch panel is received, and lowering the designated window in a case that a valid command for controlling the designated window generated by the user through the second control touch panel is received; and controlling the feedback apparatus 3 to indicate that the designated window is being controlled by the user.

In the present disclosure, the first control touch panel and the second control touch panel are arranged, where the first control touch panel corresponds to raising the designated window, and the second control touch panel corresponds to lowering the designated window. In this way, the user can raise the designated window by performing an operation on the first control touch panel and lower the designated window by performing an operation on the second control touch panel, realizing a convenient operation for the user.

For example, when the user operates with a finger sliding downwards on the first control touch panel, the designated window is raised to a highest point. When the user operates with a finger sliding upward on the second control touch panel, the designated window is lowered to a lowest point. An operation gesture and an operation direction on the first control touch panel and the second control touch panel are not limited herein.

In addition, each of the first control touch panel and the second control touch panel in the present disclosure may be provided with an indicator indicating an upward direction or an indicator indicating a downward direction, so as to facilitate raising or lowering the window under a control by the user.

In addition, when touching the touch panel for window selection, the user may directly slide a finger to the first control touch panel or the second control touch panel, to raise or lower the window.

As a preferred embodiment, a process of raising or lowering the designated window and controlling the feedback apparatus to indicate that the designated window is being controlled by the user, in a case that the valid command for raising or lowering the designated window is received, includes: raising the designated window in a case that a valid command for controlling the designated window generated by the user performing an operation at a first preset position on the touch panel for window control is received, and stopping raising the designate window when the user stops the operation at the first preset position; and lowering the designated window if a valid command for controlling the designated window generated by the user performing an operation at a second preset position on the touch panel for window control is received, stopping lowering the designate window until the user stops the operation at the second preset position.

In the present disclosure, the first preset position and the second preset position are defined on the touch panel for window control in order to further facilitate raising or lowering the window by the user. The user may perform an operation at the first preset position on the touch panel for window control to raise the designated window, and stop raising the designated window by stopping the operation at the first preset position. The user may perform an operation at the second preset position on the touch panel for window control to lower the designated window, and stop lowering the designated window by stopping the operation at the second preset position.

For example, the touch panel for window control may be provided with two grooves, and the user may control the designated window by operating with one or two fingers sliding in the two grooves. A ridge is provided in the middle of each of the grooves, a position above the ridge is defined as the first preset position, and a position below the ridge is defined as the second preset position, so as to facilitate an operation of the user. Alternatively, an indicator indicating an arrow may be arranged in each of the two grooves, to indicate an upward direction or a downward direction. A position of the indicator indicating an upward direction may be defined as the first preset position, and a position of the indicator indicating a downward direction may be defined as the second preset position.

For another example, the first control touch panel and the second control touch panel may be arranged on the touch panel for window control, the first preset position is defined on the first control touch panel, and the second preset position is defined on the second control touch panel, so as to facilitate an operation of the user.

In a case that the user presses at the first preset position or the second preset position, for example, for less than or equal to one second, the designated window is raised or lowered by a preset distance. In a case that the user presses at the first preset position or the second preset position for more than one second, the designated window is raised or lowered until the user stops pressing at the first preset position or the second preset position.

It should be noted that in the present disclosure, the user may operate at the first preset position or the second preset position by pressing or touching, which is not limited in the present disclosure.

Reference is made to Figure 3, which is a schematic structural diagram of a device for controlling a window of a vehicle according to an embodiment of the present disclosure. The device includes a memory 5 and a processor 2. The memory 5 is configured to store a computer program. The processor 2 is configured to perform, when executing the computer program, the method for controlling a window of a vehicle described above.

For the description of the device for controlling a window of a vehicle provided in the present disclosure, reference is made to the method embodiments described above, which is not repeated here.

As a preferred embodiment, the device further includes a user operation touch panel 1. The user operation touch panel 1 includes a touch panel for window selection and a touch panel for window control. The touch panel for window selection includes a window pre-selection key and multiple window selection keys. The window selection keys are in one-to-one correspondence to windows in the vehicle.

In the embodiments, the user operation touch panel 1 is provided with the touch panel for window selection and the touch panel for window control; the touch panel for window selection includes the window pre-selection key and the window selection keys; and the window selection keys are in one-to-one correspondence to windows, which facilitates receiving of corresponding commands and facilitates operation of the user.

It should be noted that, in the present disclosure, the user operation touch panel 1 is connected with the processor 2, which make it easy for the user to receive corresponding commands and control the designated window.

In addition, a color of the user operation touch panel 1 may be determined based on an interior decoration style of the vehicle. The user operation touch panel 1 may be made of, but is not limited to, real wood. The color and the material of the user operation touch panel 1 are not limited in the present disclosure.

As a preferred embodiment, the user operation touch panel 1 is rectangular. The touch panel for window selection is circular and recessed. The window pre-selection key is arranged at a center of the touch panel for window selection, and is circular and cambered. Each of the window selection keys is fan-shaped, and the window selection keys constitute a ring surrounding the window pre-selection key.

The touch panel for window control includes a first control touch panel and/or a second control touch panel. Each of the first control touch panel and the second control touch panel is square and recessed.

In the embodiment, the user operation touch panel 1 is rectangular; the touch panel for window selection is circular and recessed; the window pre-selection key is arranged at a center of the touch panel for window selection, and is circular and cambered, so as to facilitate touch on the window pre-selection key and a user operation without looking; each of the window selection keys is fan-shaped, and the window selection keys constitute a ring surrounding the window pre-selection key, so as to facilitate sliding a finger to a corresponding window selection key by the user.

For example, in a case that a vehicle has four windows, there are four touch panels for window selection arranged at the following four positions respectively: upper left of a window pre-selection module, corresponding to a window at a position of a driver; upper right of the window pre-selection module, corresponding to a window at a position of a co-driver; lower left of the window pre-selection module, corresponding to a window at a position behind the driver; and lower right of the window pre-selection module, corresponding to a window at a position behind the front passenger seat. The design is modern and simple, and meets user requirements.

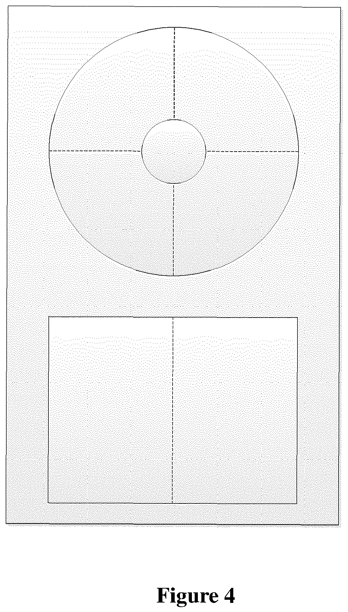

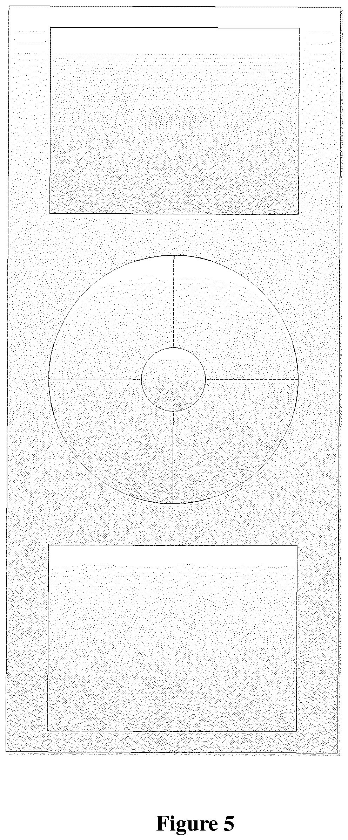

Reference is made to Figures 4 and 5, where Figure 4 is a schematic diagram of a user operation touch panel according to an embodiment of the present disclosure, and Figure 5 is a schematic diagram of another user operation touch panel according to another embodiment of the present disclosure.

In Figure 4, a circle on an upper half of Figure 4 represents the touch panel for window selection; four fan-shaped areas defined by dotted lines represent four window selection keys; a circular key at a center of a ring constituted by the four window selection keys represents the window pre-selection key; and a square on a lower half of Figure 4 represents the touch panel for window control, which is divided into two grooves, shown by dotted lines. The user may control a window by operating with one or two fingers sliding in the two grooves.

In Figure 5, a circle in a middle of Figure 5 represents the touch panel for window selection; four fan-shaped areas defined by dotted lines represent four window selection keys; a circular key at a center of a ring constituted by the four window selection keys represents the window pre-selection key; and squares located on an upper part and a lower part of Figure 5 collectively present the touch panel for window control, i.e., the first control touch panel and the second control touch panel. The user may raise a window by operating with a finger sliding on the first control touch panel, and lower a window by operating with a finger sliding on the second control touch panel.

It should be further noted that in the present disclosure, the relationship terminologies such as "first" and "second" are only used herein to distinguish one entity or operation from another entity or operation, rather than to necessitate or imply that the actual relationship or order exists between the entities or operations. Moreover, terms of "include", "comprise" or any other variants are intended to be non-exclusive. Therefore, a process, method, article or device including a series of elements includes not only the elements but also other elements that are not enumerated, or also includes the elements inherent for the process, method, article or device. Unless expressively limited otherwise, the statement "comprising (including) one..." does not exclude the case that other similar elements may exist in the process, method, article or device.

Based on the above description of the disclosed embodiments, those skilled in the art can implement or carry out the present disclosure. It is apparent for those skilled in the art to make many modifications to these embodiments. The general principle defined herein may be applied to other embodiments without departing from the spirit or scope of the present disclosure. Therefore, the present disclosure is not limited to the embodiments of the present disclosure, but should be defined by the widest scope consistent with the principle and novel features disclosed herein.

## Claims

1. A method for controlling a window of a vehicle, comprising steps of:
determining whether a valid command for selecting a designated window is received, wherein the valid command for selecting a designated window is generated by a user through a touch panel for window selection;
controlling a feedback apparatus to indicate the designated window selected by the user, and determining whether a valid command for raising or lowering the designated window is received, in a case that the valid command for selecting a designated window is received, wherein the valid command for raising or lowering the designated window is generated by the user through a touch panel for window control; and
raising or lowering the designated window and controlling the feedback apparatus to indicate that the designated window is being controlled by the user, in a case that the valid command for raising or lowering the designated window is received.

2. The method according to claim 1, wherein the touch panel for window selection comprises a window pre-selection key and a plurality of window selection keys, wherein the window selection keys are in one-to-one correspondence to windows of the vehicle, and wherein:
the determining whether a valid command for selecting a designated window is received comprises:
determining whether a valid command for starting window selection is received, wherein the valid command for starting window selection is generated by the user through the window pre-selection key;
determining, in a case that the valid command for starting window selection is received, whether a valid command generated by the user touching the plurality of window selection keys is received; and
in a case that a valid command generated by the user performing an operation on the plurality of window selection keys is received, determining that the valid command for selecting a designated window is received, and determining a window corresponding to a window selection key as the designated window, wherein the window selection key is last selected among the plurality of window selection keys before a finger of the user leaves the touch panel for window selection.

3. The method according to claim 2, wherein the touch panel for window selection further comprises a key for selecting all windows, and
after the determining whether a valid command for starting window selection is received, the method further comprises:
determining, in a case that the valid command for starting window selection is received, whether a valid command for selecting all windows as the designated window is received, wherein the valid command for selecting all windows as the designated window is generated by the user through the key for selecting all windows;
raising or lowering the designated window and controlling the feedback apparatus to indicate that the designated window is being controlled by the user, in a case that the valid command for selecting all windows as the designated window is received; and
determining, in a case that the valid command for selecting all windows as the designated window is not received, whether a valid command generated by the user performing an operation on the plurality of window selection keys is received.

4. The method according to claim 2, wherein
the feedback apparatus comprises at least one of: window selection indicators in one-to-one correspondence to the window selection keys, a window-rise indicator indicating raising a window, a window-fall indicator indicating lowering a window, a display device, an auditory prompt device, or a vibration prompt device,
after the determining whether a valid command for starting window selection is received, the method further comprises:
in a case that the valid command for starting window selection is received,
performing at least one of: turning on at least one of the window selection indicators, the window-rise indicator, or the window-fall indicator; controlling the display device to indicate that a control on a window by the user is started; controlling the auditory prompt device to play a preset audio; or controlling the vibration prompt device to vibrate; and
determining whether a valid command generated by the user performing an operation on the plurality of window selection keys is received;
the controlling a feedback apparatus to indicate the designated window selected by the user, in a case that the valid command for selecting a designated window is received, comprises:
in a case that the valid command for selecting a designated window is received,
performing at least one of: turning on a window selection indicator corresponding to the designated window and turning off the window selection indicator corresponding to a window other than the designated window; turning on the window-rise indicator; turning on the window-fall indicator; controlling the display device to indicate the designated window selected by the user; controlling the auditory prompt device to play a preset audio; or controlling the vibration prompt device to vibrate, and
determining whether a valid command for raising or lowering the designated window is received; and
the raising or lowering the designated window and controlling the feedback apparatus to indicate that the designated window is being controlled by the user, in a case that the valid command for raising or lowering the designated window is received, comprises:
in a case that the valid command for raising or lowering the designated window is received, raising or lowering the designated window, and performing at least one of: turning on a window selection indicator corresponding to the designated window and turning off the window selection indicator corresponding to a window other than the designated window; turning on the window-rise indicator in a case that the valid command instructs to raise the designated window; turning on the window-fall indicator in a case that the valid command instructs to lower the designated window; controlling the display device to indicate information of the designated window selected by the user; controlling the auditory prompt device to play a preset audio; or controlling the vibration prompt device to vibrate.

5. The method according to claim 1, wherein the raising or lowering the designated window and controlling the feedback apparatus to indicate that the designated window is being controlled by the user, in a case that the valid command for raising or lowering the designated window is received, comprises:
raising the designated window in a case that a valid command generated by the user performing an operation on the touch panel for window control with a first preset number of fingers is received;
lowering the designated window in a case that a valid command generated by the user performing an operation on the touch panel for window control with a second preset number of fingers is received; and
controlling the feedback apparatus to indicate that the designated window is being controlled by the user, wherein
the first preset number is not equal to the second preset number.

6. The method according to claim 1, wherein the touch panel for window control comprises a first control touch panel and a second control touch panel, and wherein the raising or lowering the designated window and controlling the feedback apparatus to indicate that the designated window is being controlled by the user, in a case that the valid command for raising or lowering the designated window is received, comprises:
raising the designated window in a case that a valid command for controlling the designated window generated by the user through the first control touch panel is received;
lowering the designated window in a case that a valid command for controlling thedesignated window generated by the user through the second control touch panel is received; and
controlling the feedback apparatus to indicate that the designated window is being controlled by the user.

7. The method according to claim 5 or 6, wherein the raising or lowering the designated window and controlling the feedback apparatus to indicate that the designated window is being controlled by the user, in a case that the valid command for raising or lowering the designated window is received, comprises:
raising the designated window in a case that a valid command for controlling the designated window generated by the user performing an operation at a first preset position on the touch panel for window control is received, and stopping raising the designated window when the user stops the operation at the first preset position; and
lowering the designated window in a case that a valid command for controlling the designated window generated by the user performing an operation at a second preset position on the touch panel for window control is received, and stopping lowering the designated window until the user stops the operation at the second preset position.

8. A device for controlling a window of a vehicle, comprising:
a memory configured to store a computer program; and
a processor configured to perform, when executing the computer program, the method according to any one of claims 1 to 7.

9. The device according to claim 8, further comprising a user operation touch panel, wherein
the user operation touch panel comprises the touch panel for window selection and the touch panel for window control, and the touch panel for window selection comprises a window pre-selection key and a plurality of window selection keys, wherein the window selection keys are in one-to-one correspondence to windows of the vehicle.

10. The device according to claim 9, wherein
the user operation touch panel is rectangular;
the touch panel for window selection is circular and recessed;
the window pre-selection key is arranged at a center of the touch panel for window selection, and is circular and cambered;
each of the window selection keys is fan-shaped, and the window selection keys constitute a ring surrounding the window pre-selection key; and
the touch panel for window control comprises a first control touch panel and/or a second control touch panel, and each of the first control touch panel and the second control touch panel is square and recessed.

## Amended claims

### Amended claims under Art. 19.1 PCT

1. A method for controlling a window of a vehicle, comprising steps of:
determining whether a valid command for selecting a designated window is received, wherein the valid command for selecting a designated window is generated by a user through a touch panel for window selection;
controlling a feedback apparatus to indicate the designated window selected by the user, and determining whether a valid command for raising or lowering the designated window is received, in a case that the valid command for selecting a designated window is received, wherein the valid command for raising or lowering the designated window is generated by the user through a touch panel for window control; and
raising or lowering the designated window and controlling the feedback apparatus to indicate that the designated window is being controlled by the user, in a case that the valid command for raising or lowering the designated window is received, wherein
the raising or lowering the designated window and controlling the feedback apparatus to indicate that the designated window is being controlled by the user, in a case that the valid command for raising or lowering the designated window is received comprises:
raising the designated window in a case that a valid command generated by the user performing an operation on the touch panel for window control with a first preset number of fingers is received; and lowering the designated window in a case that a valid command generated by the user performing an operation on the touch panel for window control with a second preset number of fingers is received, and controlling the feedback apparatus to indicate that the designated window is being controlled by the user, wherein the first preset number is not equal to the second preset number; or
in a case that the touch panel for window control comprises a first control touch panel and a second control touch panel, the raising or lowering the designated window and controlling the feedback apparatus to indicate that the designated window is being controlled by the user, in a case that the valid command for raising or lowering the designated window is received comprises:
raising the designated window in a case that a valid command for controlling the designated window generated by the user through the first control touch panel is received; lowering the designated window in a case that a valid command for controlling the designated window generated by the user through the second control touch panel is received; and controlling the feedback apparatus to indicate that the designated window is being controlled by the user.

2. The method according to claim 1, wherein the touch panel for window selection comprises a window pre-selection key and a plurality of window selection keys, wherein the window selection keys are in one-to-one correspondence to windows of the vehicle, and wherein:
the determining whether a valid command for selecting a designated window is received comprises:
determining whether a valid command for starting window selection is received, wherein the valid command for starting window selection is generated by the user through the window pre-selection key;
determining, in a case that the valid command for starting window selection is received, whether a valid command generated by the user touching the plurality of window selection keys is received; and
in a case that a valid command generated by the user performing an operation on the plurality of window selection keys is received, determining that the valid command for selecting a designated window is received, and determining a window corresponding to a window selection key as the designated window, wherein the window selection key is last selected among the plurality of window selection keys before a finger of the user leaves the touch panel for window selection.

3. The method according to claim 2, wherein the touch panel for window selection further comprises a key for selecting all windows, and
after the determining whether a valid command for starting window selection is received, the method further comprises:
determining, in a case that the valid command for starting window selection is received, whether a valid command for selecting all windows as the designated window is received, wherein the valid command for selecting all windows as the designated window is generated by the user through the key for selecting all windows;
raising or lowering the designated window and controlling the feedback apparatus to indicate that the designated window is being controlled by the user, in a case that the valid command for selecting all windows as the designated window is received; and
determining, in a case that the valid command for selecting all windows as the designated window is not received, whether a valid command generated by the user performing an operation on the plurality of window selection keys is received.

4. The method according to claim 2, wherein
the feedback apparatus comprises at least one of: window selection indicators in one-to-one correspondence to the window selection keys, a window-rise indicator indicating raising a window, a window-fall indicator indicating lowering a window, a display device, an auditory prompt device, or a vibration prompt device,
after the determining whether a valid command for starting window selection is received, the method further comprises:
in a case that the valid command for starting window selection is received,
performing at least one of: turning on at least one of the window selection indicators, the window-rise indicator, or the window-fall indicator; controlling the display device to indicate that a control on a window by the user is started; controlling the auditory prompt device to play a preset audio; or controlling the vibration prompt device to vibrate; and
determining whether a valid command generated by the user performing an operation on the plurality of window selection keys is received;
the controlling a feedback apparatus to indicate the designated window selected by the user, in a case that the valid command for selecting a designated window is received, comprises:
in a case that the valid command for selecting a designated window is received,
performing at least one of: turning on a window selection indicator corresponding to the designated window and turning off the window selection indicator corresponding to a window other than the designated window; turning on the window-rise indicator; turning on the window-fall indicator; controlling the display device to indicate the designated window selected by the user; controlling the auditory prompt device to play a preset audio; or controlling the vibration prompt device to vibrate, and
determining whether a valid command for raising or lowering the designated window is received; and
the raising or lowering the designated window and controlling the feedback apparatus to indicate that the designated window is being controlled by the user, in a case that the valid command for raising or lowering the designated window is received, comprises:
in a case that the valid command for raising or lowering the designated window is received, raising or lowering the designated window, and performing at least one of: turning on a window selection indicator corresponding to the designated window and turning off the window selection indicator corresponding to a window other than the designated window; turning on the window-rise indicator in a case that the valid command instructs to raise the designated window; turning on the window-fall indicator in a case that the valid command instructs to lower the designated window; controlling the display device to indicate information of the designated window selected by the user; controlling the auditory prompt device to play a preset audio; or controlling the vibration prompt device to vibrate.

5. The method according to claim 1, wherein the raising or lowering the designated window and controlling the feedback apparatus to indicate that the designated window is being controlled by the user, in a case that the valid command for raising or lowering the designated window is received, comprises:
raising the designated window in a case that a valid command for controlling the designated window generated by the user performing an operation at a first preset position on the touch panel for window control is received, and stopping raising the designated window when the user stops the operation at the first preset position; and
lowering the designated window in a case that a valid command for controlling the designated window generated by the user performing an operation at a second preset position on the touch panel for window control is received, and stopping lowering the designated window until the user stops the operation at the second preset position.

6. A device for controlling a window of a vehicle, comprising:
a memory configured to store a computer program; and
a processor configured to perform, when executing the computer program, the method according to any one of claims 1 to 5.

7. The device according to claim 6, further comprising a user operation touch panel, wherein
the user operation touch panel comprises the touch panel for window selection and the touch panel for window control, and the touch panel for window selection comprises a window pre-selection key and a plurality of window selection keys, wherein the window selection keys are in one-to-one correspondence to windows of the vehicle.

8. The device according to claim 7, wherein
the user operation touch panel is rectangular;
the touch panel for window selection is circular and recessed;
the window pre-selection key is arranged at a center of the touch panel for window selection, and is circular and cambered;
each of the window selection keys is fan-shaped, and the window selection keys constitute a ring surrounding the window pre-selection key; and
the touch panel for window control comprises a first control touch panel and/or a second control touch panel, and each of the first control touch panel and the second control touch panel is square and recessed.
